# EUROPEAN PATENT SPECIFICATION

(11) **EP 3 949 764 B1**
(45) Date of publication and mention of the grant of the patent: **18.01.2023**
(21) Application number: 20189313.8
(22) Date of filing: 04.08.2020
(51) Int. Cl.: A24D 1/20, A24F 40/465

(54) **AEROSOL GENERATING ARTICLE AND SYSTEM**
AEROSOLERZEUGUNGSARTIKEL UND -SYSTEM
ARTICLE ET SYSTÈME DE GÉNÉRATION D'AÉROSOL

(43) Date of publication of application: 09.02.2022
(73) Proprietor: JT International SA, 1202 Geneva (CH)
(72) Inventor: ROGAN, Andrew Robert John, Forres, Morray IV36 2ZH (GB); WRIGHT, Alec, Guildford, Surrey GU2 7SU (GB)
(74) Representative: Gill Jennings & Every LLP

(56) References cited:
- WO-A1-2015/097005
- WO-A1-2019/129639
- WO-A1-2019/219740
- WO-A1-2020/109203
- WO-A1-2020/120271

## Description

### FIELD OF THE INVENTION

The invention relates to an aerosol generating article for producing an aerosol for inhalation by a user, and to an aerosol generating system that incorporates said article. Such an article is known from WO-A-2020/109203.

### BACKGROUND

Aerosol generating devices have become popular as alternatives to traditional combustible tobacco products. Heated tobacco products, also referred to as heat-not-burn products, are one class of aerosol generating device that are configured to heat a tobacco substrate to a temperature that is sufficient to produce an aerosol from the substrate but is not so high that the tobacco combusts. Although this specification makes reference to heated tobacco products in particular, it will be appreciated that the discussion that follows applies equally to aerosol generating systems that incorporate other kinds of heatable substrate.

In some heated tobacco products, the tobacco substrate is heated by one or more inductively heatable susceptors located inside the article. When the article is placed inside an oscillating magnetic field, the susceptors couple to the magnetic field and produce heat, which in turn heats the substrate. The rate at which the substrate is heated depends on the intensity of the magnetic field at the position of the susceptors, but safety concerns regarding the strength of the electromagnetic field to which the user is exposed limit the strength of the magnetic field that can be generated by such devices, and hence limit the rate of heating that can be achieved.

There is a need for an aerosol generating system that overcomes these problems.

### SUMMARY OF THE INVENTION

A first aspect of the invention provides an aerosol generating article comprising: an airflow channel that extends along a first axis; a material part disposed inside the airflow channel, wherein the material part comprises a substrate for generating an aerosol and one or more inductively heatable susceptors for heating the substrate; a valve disposed inside the airflow channel and spaced from the material part along the first axis, the valve having an open state and a closed state, wherein the valve is configured to substantially impede air flow through the airflow channel when in the closed state; and a conductive loop that is spaced from the material part along the first axis and is configured to produce, when in the presence of an oscillating magnetic field aligned substantially along the first axis, a reverse magnetic field aligned oppositely to the oscillating magnetic field.

As the article is heated, the temperature of both the substrate and the valve increases. Until the valve reaches the transition temperature, it remains in the closed state and prevents airflow through the article; and when it reaches the transition temperature, it opens, allowing the user to consume the aerosol by drawing air through the airflow channel. This arrangement prevents the user from igniting the substrate, since while the valve is in the closed state, air cannot flow through the airflow channel, and this prevents sustained combustion of the substrate. It also prevents the generated aerosol being released from inside the airflow channel until the article reaches the transition temperature, so the valve can be configured to prevent the user from extracting the aerosol until the article is near or at its optimum operating temperature.

Shape memory alloys are one class of materials suitable for forming the valve. A shape memory alloy can be plastically deformed into a first form while cool, i.e. when below the transition temperature. When heated to the transition temperature (which is a property of the particular alloy), the shape memory alloy reverts to a second form, which is the form that it has prior to its deformation. The two states of a shape memory alloy can thus define the open and closed states of the valve. Nickel-titanium and copper-aluminium-nickel are examples of shape memory alloys suitable for use in implementations of the present invention. The use of shape memory alloys in forming the valve in preferred implementations will be discussed in more detail later. In other embodiments, as an alternative to a shape memory alloy, the valve could comprise a metal (for example copper or aluminium) configured such that thermal expansion of the metal causes the valve to open when at the transition temperature.

Preferably the valve and the conductive loop are mechanically connected to one another. This allows the valve and the conductive loop to be conveniently provided as a single unit, which could be located inside the airflow channel adjacent to the material part, for example. In other embodiments, however, the valve and conductive loop are provided separately.

In particularly preferred embodiments, the valve and the conductive loop are integral with one another. The valve and the conductive loop could be an integral unit formed of a shape memory alloy, a metal (e.g. copper) or another conductive material, for example.

In preferred implementations, the conductive loop is shaped either as a ring that lies in a plane substantially perpendicular to the first axis or as a hollow cylinder having its cylindrical axis aligned substantially with the first axis. As a result, the aperture of the ring or cylinder will be aligned along the same direction as the airflow channel, minimising the obstruction of the channel by the conductive loop. The ring or cylinder could have a solid surface, but could alternatively be formed by a grid or mesh of a conductive material.

As was explained above, shape memory alloys are a class of materials that are suitable for forming the valve. Hence, in preferred embodiments, the valve comprises a shape memory alloy material that is configured such that the valve changes from the closed state to the open state when heated to a transition temperature of the shape memory alloy. The transition of the form of the shape memory alloy that occurs at the transition temperature thus causes the valve to open. The valve could be shaped such that the shape memory alloy itself obstructs the channel when the valve is in the closed state, in which case the shape memory alloy can be configured to change to a form in which it permits airflow through the channel when heated to the transition temperature. Alternatively, the shape memory alloy could be arranged to act mechanically on another part of the valve when heated to the transition temperature. That other part of the valve would be arranged to close the channel when the valve is in the closed state, and would be moved by the shape memory alloy as it changes state to as to allow airflow through the channel.

Particularly advantageously, the shape memory alloy can be configured to be in a first form when the valve is in the closed state and to be in a second form when the valve is in the open state, wherein the shape memory alloy is arranged such that when heated to the transition temperature while in the first form, the shape memory alloy transitions from the first form to the second form so as to change the valve from the closed state to the open state. The operation of the valve is thus controlled by the action of the shape memory alloy as it changes from one form to the other.

In preferred embodiments, the valve comprises: a flap arranged to substantially close the airflow channel when the valve is in the closed state; and an actuating portion that comprises the shape memory alloy material and is mechanically connected to the flap, wherein the actuating portion is arranged such that when the valve is heated to the transition temperature while the valve is in the closed state, the actuating portion moves the flap so as to open the airflow channel. It is particularly preferred that the actuating portion and the flap are integral with one another. In these embodiments, the flap obstructs the airflow channel when the valve is in the closed state. This impedes the flow of air through the channel. When the valve is in the open state, the flap should impede the flow of air through the channel to a lesser degree than when in the closed state (and preferably substantially not at all). The actuating portion may have the first form referred to above when the valve is in the closed state the second form referred to above when the valve is in the open state.

In particularly preferred embodiments, the conductive loop is mechanically connected to the actuating portion. This is particularly advantageous as the conductive loop can provide a secure attachment point for the actuating portion, allowing the valve to move in the desired manner as the shape memory alloy in the actuating portion transitions between its two forms. However, the conductive loop and the valve can be provided as separate units.

Where a shape memory alloy is provided in any part of the valve, conductive loop or elsewhere in the article, the shape memory alloy material preferably has a Curie temperature of less than 200°C, more preferably less than 100° C. This is advantageous as the shape memory alloy can only experience heating by magnetic losses when below the Curie temperature, which is the highest temperature at which permanent magnetisation can exist in the alloy. The rate at which the shape memory alloy heats in the presence of a magnetic field is thus reduced when above the Curie temperature, preventing the shape memory alloy from scorching the combustible components of the article (for example the substrate and, if provided, the shell or filter).

In some preferred implementations, the conductive loop is formed of a metal, most preferably copper. Metals such as copper are highly conductive, and this maximises the strength of the opposing magnetic field generated by the conductive loop when in the presence of the oscillating magnetic field described above. As was noted above, in other preferred embodiments, the conductive loop may be formed of a shape memory alloy, in particular where the conductive loop is integral with the valve.

In preferred embodiments, the one or more inductively heatable susceptors comprise a first material and the conductive loop comprises a second material having a lower resistivity than the first material. It is advantageous that the conductivity of the loop is high, since this ensures that the opposing magnetic field is comparatively strong and minimises heating of the loop due to the induced current. On the contrary, it is advantageous that the conductivity of the material of the inductively heatable susceptors is comparatively low, since it is desirable that the susceptors heat rapidly in the presence of an oscillating magnetic field. For example, the first material could be aluminium, and the second material could be copper. In other embodiments, however, the first and second materials could be the same. For example, both could be aluminium. The aerosol generating article preferably comprises a filter for filtering the aerosol generated by the material part. The filter may be disposed inside the airflow channel, for example. The filter may be configured to filter any potentially harmful substances from the aerosol, and may cool the aerosol passing through it.

A second aspect of the invention provides an aerosol generating system comprising: an aerosol generating article in accordance with the first aspect of the invention; and a heating device comprising an inductor for producing an oscillating magnetic field aligned substantially along the first axis for heating the one or more inductively heatable susceptors. The heating device could be a hand-held device that facilitates consumption of the generated vapour by inhalation, and could include features such as an electrical power source for powering the inductor and a mouthpiece in fluid communication with the chamber whereby the aerosol can be drawn from the article by a user. As was explained above, the presence of a conductive loop in the aerosol generating article allows the construction of the heating device to be simplified, since the heating device does not need to be provided with electromagnetic shielding in order to protect the user from high electromagnetic fields.

In preferred implementations, the heating device comprises a chamber adapted to receive the aerosol generating article and hold the aerosol generating article in the oscillating magnetic field.

Advantageously, the inductor comprises an electrically-powered coil, for example a helical coil. The magnetic field produced inside such a coil as a current is passed through it can be strong and highly uniform, since the field lines run parallel to one another along the axis about which the coil is wound. As such, the coil can be adapted such that the aerosol generating article can be disposed inside of it, preferably such that the airflow channel is concentric with the coil.

### BRIEF DESCRIPTION OF THE DRAWINGS

Examples of aerosol generating articles and an aerosol generating system in accordance with embodiments of the invention will now be described with reference to the accompanying drawings, in which:
Figure 1 shows an exemplary valve unit suitable for use in embodiments of the invention;
Figure 2 is a cross-sectional view of an aerosol generating article in accordance with a first embodiment of the first aspect of the invention;
Figure 3 shows an exemplary valve suitable for use in embodiments of the invention;
Figure 4 is a cross-sectional view of an aerosol generating article in accordance with a second embodiment of the first aspect of the invention;
Figure 5 is a cross-sectional view of an aerosol generating system in accordance with the second aspect of the invention.

### DETAILED DESCRIPTION

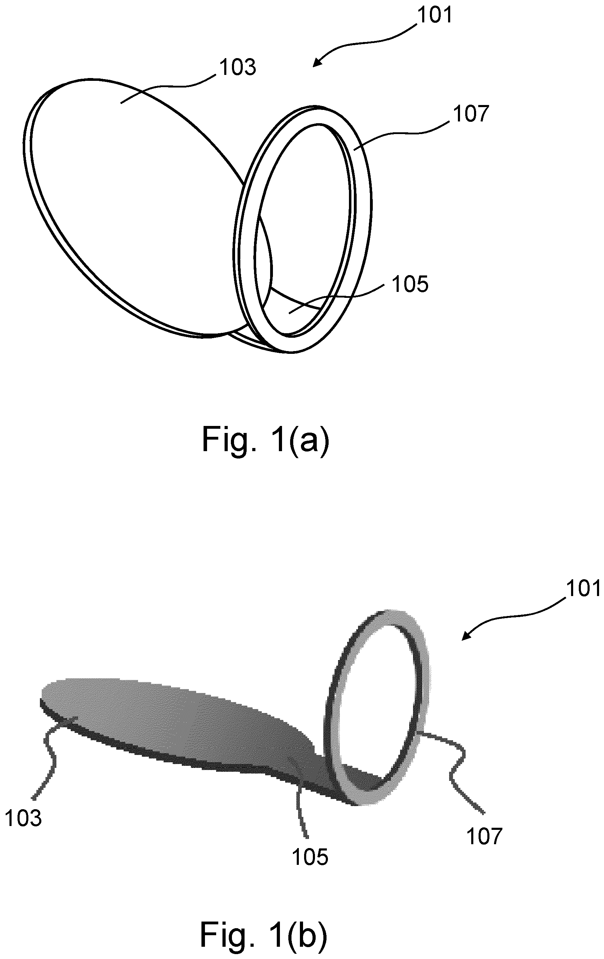

Figure 1(a) shows an exemplary valve unit 101, which includes a valve, formed of a flap 103 and an actuating portion 105, and a conductive ring 107, which is mechanically connected to the actuating portion 105.

In Figure 1(a), the valve is in a first form, in which the actuating portion 105 has a curved shape and holds the flap 103 that is non-perpendicular to the plane in which the ring 107 lies. When the valve unit 101 is heated to a transition temperature of the valve, the actuating portion 105 changes to a second form in which it has a substantially planar shape, as shown in Figure 1(b), and moves the flap 103 into a position that is substantially coplanar with the actuating portion 105. This behaviour can be achieved by forming the valve unit 101 of a shape memory alloy: the two states of the shape memory alloy correspond to the first and second forms of the actuating portion 105. For example, the valve unit 101 could be manufactured in the form shown in Figure 1(b), then the actuating portion 105 could be plastically deformed while below the transition temperature of the shape memory alloy into the form shown in Figure 1(a). When heated to the transition temperature, the actuating portion would change from the first form to the second form and would as a result move the flap 103 into the position shown in Figure 1(b).

As an alternative to the use of a shape memory alloy, similar functionality could be achieved by forming the actuating portion of two layered metals having different coefficients of thermal expansion. As the valve unit 101 is heated, the two metals will expand at different rates, and this will cause the actuating portion 105 to transition from the curved form shown in Figure 1(a) to the planar form of Figure 1(b), thereby moving the flap 103 in the manner described above.

The ring 107 could be formed of the same material as the actuating portion 105 and flap 103, for example a shape memory alloy, or of another conductor such as copper. An advantage of forming the ring 107 from the same material as the flap 103 and actuating portion 105 is that this allows the valve unit 101 to be easily manufactured, for example by stamping from a sheet of the material.

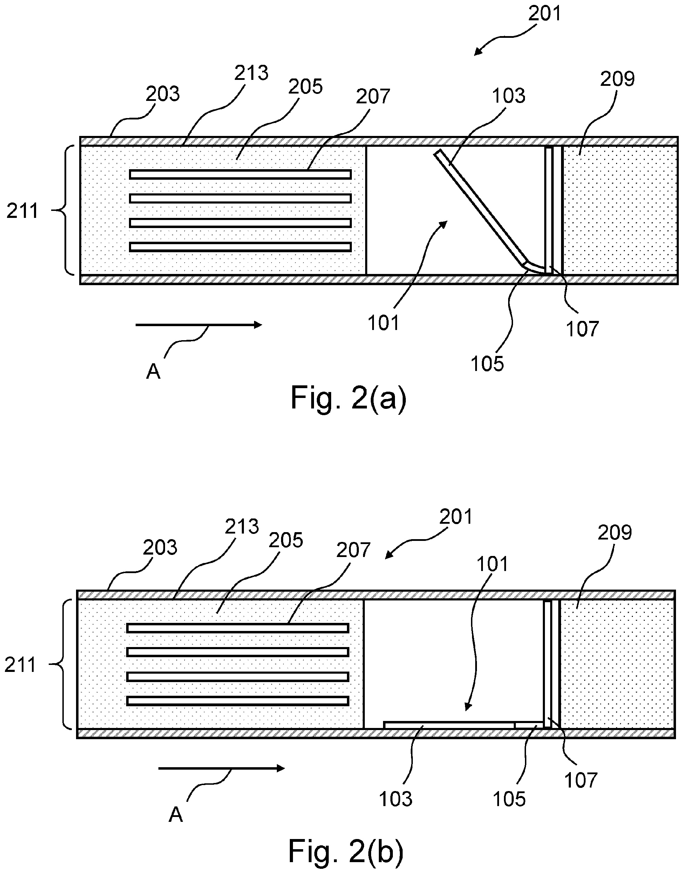

Figure 2(a) shows a cross-sectional view of an aerosol generating article 201 in accordance with an embodiment of the invention. The aerosol generating article 201 includes a shell 203, which defines an airflow channel 211 inside of which the components of the aerosol generating article 201 are disposed. The shell 203 is cylindrical in shape and can be made of paper, cardboard or a suitable polymer-based material, for example. The airflow channel 211 is aligned along a first axis, which extends along the direction labelled A.

A material part 213 is disposed inside the airflow channel 211 at one end of the article 201. The material part includes a substrate 205, which comprises a material such as reconstituted tobacco which, when heated, produces an aerosol suitable for consumption by inhalation. In this example, the material part 213 also includes a plurality of inductively heatable susceptors 207 embedded in the substrate 205. When placed in a time-varying magnetic field, the susceptors 207 convert the electromagnetic energy received from the electromagnetic field to heat and in turn heat the substrate 205. The susceptors 207 could be made of aluminium, for example. Other suitable materials include iron, nickel, stainless steel, or an alloy (e.g. nickel chromium or nickel copper). In this example, each susceptor 207 has the form of an elongate strip or rod that extends along the direction of the airflow channel 211.

At the other end of the airflow channel 211 is a filter 209. The filter 209 allows the aerosol produced by the substrate 205 to be drawn through it by a user and cools the aerosol passing through it. The filter 209 be adapted to mimic the appearance and touch sensation of a conventional cigarette filter.

A valve unit 101 as described above with reference to Figures 1(a) and 1(b) is disposed inside the airflow channel 211 between the substrate 205 and the filter 209. The actuating portion 105 is attached to an interior surface of the shell 203 (by an adhesive, for example). In Figure 2(a), the valve unit 101 is below the transition temperature and the actuating portion 105 has the first form described above. The flap 103 projects away from the surface of the shell 203 in such a way that it closes the airflow channel 211, preventing airflow through the article 201. In this example, the flap 103 projects away from the interior surface of the airflow channel 211 at a non-perpendicular angle, and the elliptical shape of the flap 103 complements the cylindrical shape of the airflow channel 211 such that the airflow channel 211 is almost or completely closed when the flap 103 is in this position.

As described above, the actuating portion 105 transitions to the second form when heated to the transition temperature of the shape memory alloy material. As this happens, the actuating portion 105 moves the flap 103 such that it lies flat against the interior surface of the shell 203. The second form of the actuating portion 105 thus defines an open state of the valve unit 101, in which the flap 103 substantially does not obstruct the airflow channel 211 and air can be drawn through the article 201 by the user. Figure 2(b) shows the same cross-sectional view of the article 201, but when the valve unit 101 is in the open state. Because air cannot be drawn through the article 201 while the valve unit 101 is in the closed state, it is very difficult to achieve sustained combustion of the substrate 205. This prevents a user from lighting the article 201 in the manner of a conventional cigarette and ensures that the article 201 can only be consumed by use with a suitable device that is capable of heating the article 201 in such a way that causes the valve unit 101 to open.

The speed with which the valve unit 101 reaches the transition temperature of the shape memory alloy relative to the rate at which the temperature of the substrate 205 increases can be controlled by varying the properties of the valve unit 101. The total heat capacity of the valve unit 101 depends on the material of which the flap 103, actuating portion 105 and ring 107 are formed, and also on the dimensions of these components (since, as the amount of any given material in the valve unit 101 increases, so also does the heat capacity of the valve unit 101). If the heat capacity of the valve unit 101 is increased, it must absorb and retain a greater amount of heat before it reaches the transition temperature. Thus, by selecting the material and dimensions of the valve unit 101 to provide a suitable heat capacity, the time taken for the for valve unit 101 to open after the commencement of heating can be varied such that a greater or lesser amount of heat will have been supplied to the substrate 205 by the time the valve unit 101 opens.

The processes that contribute to the heating of the valve unit 101 during the use of the article 201 will now be discussed. In this example, the substrate 205 is contains a plurality of inductively heatable susceptors 207, which, as explained above, produce heat when placed in a time-varying magnetic field that is aligned with (or has a substantial component aligned along) the direction along which the airflow channel 211 extends. The susceptors 207 heat the surrounding substrate 205, which causes an aerosol to be released. The aerosol fills the section of the airflow channel 211 in which the valve unit 101 is located and thus heats the valve unit 101. In some embodiments, the valve unit 101 can be configured such that heating by the aerosol alone is sufficient to cause the actuating portion 105 to transition to the second form such that the valve unit 101 changes to the open state.

The valve unit 101, and in particular the shape memory alloy (which forms the actuating portion 105, and, in some embodiments, also the flap 103), may also be configured to produce heat when placed in a time varying magnetic field. This heating occurs by two main modes. The first is resistive heating due to eddy currents induced in the conductive materials in the valve (including but not necessarily limited to the shape memory alloy) by the time-varying electromagnetic field. The second is the production of heat by changes in the magnetisation of the shape memory alloy (and any other magnetisable materials in the valve) caused by the changing electromagnetic field. This second mode of heat generating can only occur when the shape memory alloy is below its Curie temperature, above which no permanent magnetisation exists. As was explained above, it is preferably that the Curie temperature of the material(s) of which the valve unit 101 is formed is sufficiently low that this mode of heat production ceases when the valve unit 101 is in the open state.

As can be seen in Figure 2(b), the flap 103 and the actuating portion 105 assume a substantially planar configuration when the valve unit 101 is in the open state. Firstly, this minimises obstruction of the airflow channel 211 by the valve unit 101 when open. It also minimises the magnetic flux intercepted by the valve unit 101 when the article is placed inside an oscillating magnetic field of the kind that is suitable for heating the susceptors 207, i.e. one that is aligned substantially along the direction along which the airflow channel 211 extends. As a result, the rate at which the valve unit 101 is inductively heated by such a magnetic field is greatly reduced when the valve unit 101 is in the open state. This prevents the valve unit 101 reaching excessively high temperatures, which in turn prevents the shell 203, filter 209 and substrate 205 being scorched by the valve unit 101.

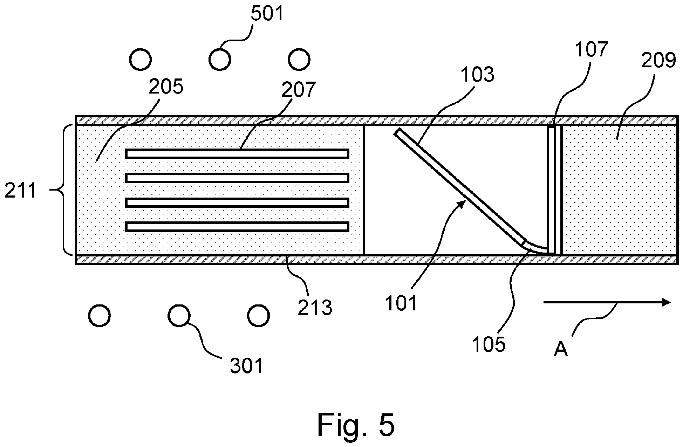

The valve unit 101 is arranged such that the ring 107 is positioned adjacent to the filter 209. As was explained above, the susceptors 207 produce heat when the article 201 is placed in an oscillating magnetic field that has at least a substantial component aligned along the direction A of the first axis. This causes the substrate 205 to heat and hence produce the aerosol. At the same time, the changing magnetic field induces a current in the ring 107, which circulates about the first axis and hence produces a magnetic field that opposes the original magnetic field. Because the material part 213 and the ring 107 are spaced from one another along the first axis, the original magnetic field remains comparatively strong at the location of the susceptors 207 and can hence achieve a high rate of heating. Outside of the article 201, however, the opposing magnetic field substantially reduces the net intensity of the magnetic field and hence prevents the user being exposed to an unacceptably high strength of electromagnetic field. This principle will be further illustrated later with reference to Figure 5, which shows a particular example of the arrangement of a magnetic field source in relation to the article 201 in an aerosol generating system.

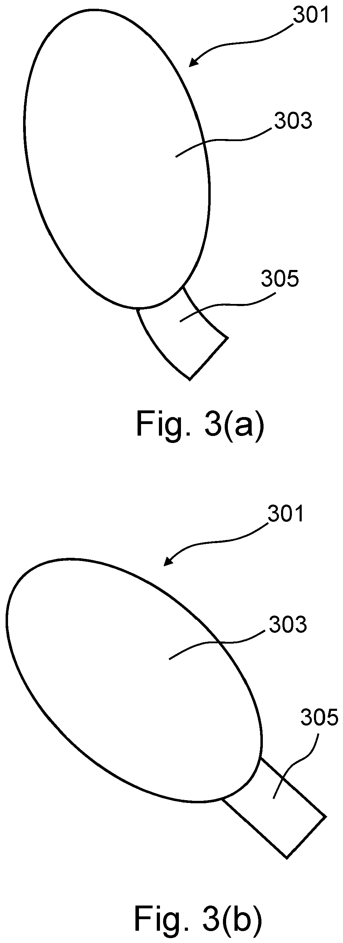

Figure 3 shows an exemplary valve 301 suitable for use in embodiments of the invention as an alternative to the valve unit 101 of Figure 1. As in the valve unit 101 of Figure 1, the valve 301 includes a flap 303 and an actuating portion 305. These components can have the same construction and properties as the flap 103 and actuating portion 105 described above with reference to Figure 1. In particular, the actuating portion 305 has a first form as shown in Figure 3(a), which can define a closed state of the valve 301. When the valve 301 reaches a transition temperature, which, as above, can be determined by the dimensions and material properties of the components, the actuating portion 305 transitions to a planar second form as shown in Figure 3(b), causing the flap 301 to move into a position that is coplanar with the actuating portion 305. In this example, however, the valve 301 does not include a ring suitable for providing a conductive loop.

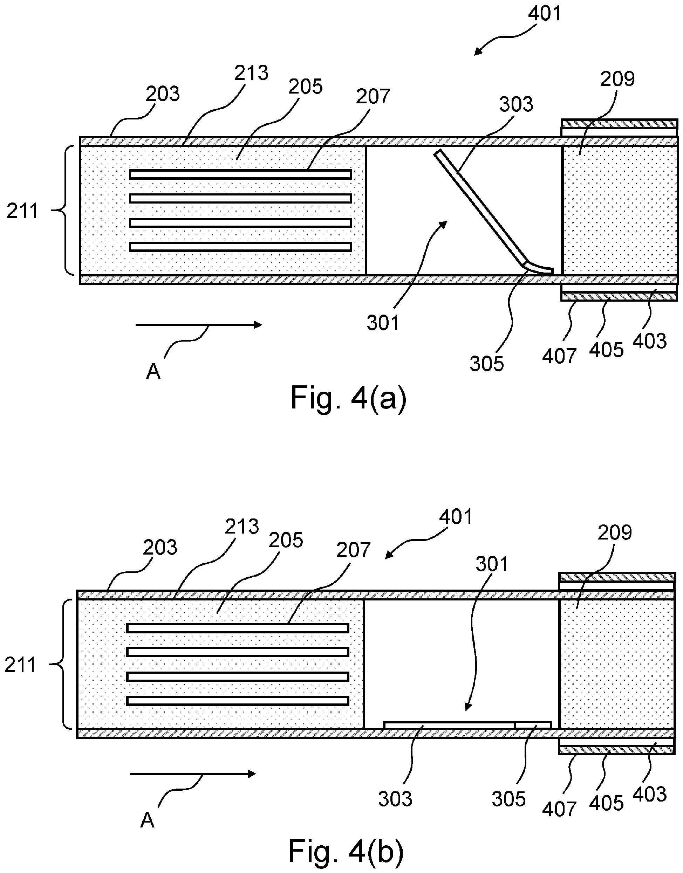

Figure 4(a) is a cross-sectional view of a second exemplary aerosol generating article 401 in accordance with the first aspect of the invention. This aerosol generating article has a shell 203, material part 213 and filter 209 as described above with reference to Figure 2. However, this article 401 incorporates the valve 301 of Figure 3.

A tipping paper 407 is disposed on the exterior surface of the shell 203 and extends around the entire circumference of the shell 203. The tipping paper 407 includes a conductive layer 403, which can be provided by a metal foil, for example copper. Alternatively, the conductive layer 403 could be provided as a mesh of a conductive material (which could again be a metal such as copper). Since the conductive layer 403 forms a complete loop about the axis of the airflow channel 211, it provides a conductive loop that is capable of generating an opposing magnetic field when the article 401 is placed inside a time-varying field suitable for heating the inductors 207. The conductive layer 403 of the tipping paper 207 hence reduces the intensity of the electromagnetic field experience by a user in proximity to the article 401 when the article is placed in an oscillating magnetic field. In this example, the tipping paper 407 also includes a cover layer 405, which conceals and protects the conductive layer 403.

Figure 5 is a cross-sectional view of part of an aerosol generating system in accordance with the second aspect of the invention. The system includes an inductor in the form of a helical coil 501. The system also includes an aerosol generating article 201 as described above with reference to Figure 2. The article 201 is positioned inside the coil 501 such that the coil 501 and the airflow channel 211 are concentric with one another. When an alternating electrical current is passed through the coil 501, an oscillating magnetic field which, inside the coil, is aligned along the direction of the airflow channel 211. This heats the susceptors 207 in the manner described above, and can also cause the valve 101 to heat by induction and/or magnetic heat losses. Although this exemplary system incorporates the article 201 of Figure 2, alternative embodiments may incorporate the article 401 of Figure 4.

The system can include other components that are not shown here. The coil 501 could be arranged inside, or to surround, a chamber suitable for holding the article 101. The chamber could be in fluid communication with an inlet and a mouthpiece that together allow air to be drawn through the article (whereby the air enters through the inlet and exits via the mouthpiece) such that the user can consume the aerosol by drawing on the mouthpiece. The device that incorporates the coil could also include a power source (for example a rechargeable battery) that powers the coil 501 in use. Once the article 101 is spent, it can be ejected from the device for disposal and replaced with a fresh article.

## Claims

1. An aerosol generating article (201) comprising:
an airflow channel (211) that extends along a first axis;
a material part (213) disposed inside the airflow channel, wherein the material part comprises a substrate for generating an aerosol and one or more inductively heatable susceptors for heating the substrate; **characterised by**
a valve (101) disposed inside the airflow channel and spaced from the material part along the first axis, the valve having an open state and a closed state, wherein the valve is configured to substantially impede airflow through the airflow channel when in the closed state; and
a conductive loop (403) that is spaced from the material part along the first axis and is configured to produce, when in the presence of an oscillating magnetic field aligned substantially along the first axis, a reverse magnetic field aligned oppositely to the oscillating magnetic field.

2. The aerosol generating article of claim 1, wherein the valve and the conductive loop are mechanically connected to one another.

3. The aerosol generating article of any preceding claim, wherein the valve and the conductive loop are integral with one another.

4. The aerosol generating article of any preceding claim, wherein the conductive loop is shaped either as a ring that lies in a plane substantially perpendicular to the first axis or as a hollow cylinder having its cylindrical axis aligned substantially with the first axis.

5. The aerosol generating article of any preceding claim, wherein the valve comprises a shape memory alloy material that is configured such that the valve changes from the closed state to the open state when heated to a transition temperature of the shape memory alloy.

6. The aerosol generating article of claim 5, wherein the shape memory alloy is configured to be in a first form when the valve is in the closed state and to be in a second form when the valve is in the open state, and wherein the shape memory alloy is arranged such that when heated to the transition temperature while in the first form, the shape memory alloy transitions from the first form to the second form so as to change the valve from the closed state to the open state.

7. The aerosol generating article of claim 5 or claim 6, wherein the valve comprises:
a flap arranged to substantially close the airflow channel when the valve is in the closed state; and
an actuating portion that comprises the shape memory alloy material and is mechanically connected to the flap, wherein the actuating portion is arranged such that when the valve is heated to the transition temperature while the valve is in the closed state, the actuating portion moves the flap so as to open the airflow channel.

8. The aerosol generating article of claim 7, wherein the actuating portion and the flap are integral with one another.

9. The aerosol generating article of claim 7 or claim 8, wherein the conductive loop is mechanically connected to the actuating portion.

10. The aerosol generating article of any of claims 5 to 9, wherein the shape memory alloy material has a Curie temperature of less than 200°C, preferably less than 100° C.

11. The aerosol generating article of any preceding claim, wherein the conductive loop is formed of a metal, preferably copper.

12. The aerosol generating article of any preceding claim, wherein the one or more inductively heatable susceptors comprise a first material and the conductive loop comprises a second material having a lower resistivity than the first material; and wherein preferably the second material is a shape memory alloy.

13. The aerosol generating article of any preceding claim, further comprising a filter for filtering the aerosol produced by the substrate.

14. An aerosol generating system comprising:
the aerosol generating article of any preceding claim; and
a heating device comprising an inductor for producing an oscillating magnetic field aligned substantially along the first axis for heating the one or more inductively heatable susceptors.

15. The aerosol generating system of claim 14, wherein the heating device comprises a chamber adapted to receive the aerosol generating article and hold the aerosol generating article in the oscillating magnetic field.

## Patentansprüche

1. Aerosolerzeugungsartikel (201), umfassend:
Einen Luftstromkanal (211), der sich entlang einer ersten Achse erstreckt;
ein Materialteil (213), das innerhalb des Luftstromkanals angeordnet ist, wobei das Materialteil ein Substrat zur Erzeugung eines Aerosols und einen oder mehrere induktiv beheizbare Suszeptoren zum Erwärmen des Substrats umfasst;
**gekennzeichnet durch** ein Ventil (101), das innerhalb des Luftstromkanals angeordnet und vom Materialteil entlang der ersten Achse beabstandet ist, wobei das Ventil einen offenen Zustand und einen geschlossenen Zustand aufweist, wobei das Ventil ausgelegt ist, den Luftstrom durch den Luftstromkanal, wenn im geschlossenen Zustand, wesentlich zu behindern; und
eine leitfähige Schleife (403), die vom Materialteil entlang der ersten Achse beabstandet ist und ausgelegt ist, wenn in Gegenwart eines oszillierenden Magnetfelds, das wesentlich entlang der ersten Achse ausgerichtet ist, ein umgekehrtes Magnetfeld zu erzeugen, das entgegengesetzt zum oszillierenden Magnetfeld ausgerichtet ist.

2. Aerosolerzeugungsartikel nach Anspruch 1, wobei das Ventil und die leitfähige Schleife mechanisch miteinander verbunden sind.

3. Aerosolerzeugungsartikel nach irgendeinem vorhergehenden Anspruch, wobei das Ventil und die leitfähige Schleife ein Ganzes bilden.

4. Aerosolerzeugungsartikel nach irgendeinem vorhergehenden Anspruch, wobei die leitfähige Schleife entweder als ein Ring, der in einer Ebene wesentlich senkrecht zur ersten Achse liegt, oder als ein Hohlzylinder gestaltet ist, dessen zylindrische Achse wesentlich mit der ersten Achse ausgerichtet ist.

5. Aerosolerzeugungsartikel nach irgendeinem vorhergehenden Anspruch, wobei das Ventil ein Material aus Formgedächtnislegierung umfasst, das derart ausgelegt ist, dass sich das Ventil, bei Erwärmung auf eine Übergangstemperatur der Formgedächtnislegierung, aus dem geschlossenen Zustand in den offenen Zustand ändert.

6. Aerosolerzeugungsartikel nach Anspruch 5, wobei die Formgedächtnislegierung ausgelegt ist, in einer ersten Form zu sein, wenn sich das Ventil im geschlossenen Zustand befindet und in einer zweiten Form zu sein, wenn sich das Ventil im offenen Zustand befindet, und wobei die Formgedächtnislegierung derart eingerichtet ist, dass, bei Erwärmung auf die Übergangstemperatur, während in der ersten Form, die Formgedächtnislegierung aus der ersten Form in die zweite Form übergeht, um das Ventil aus dem geschlossenen Zustand in den offenen Zustand zu ändern.

7. Aerosolerzeugungsartikel nach Anspruch 5 oder 6, wobei das Ventil umfasst:
Eine Klappe, die eingerichtet ist, den Luftstromkanal wesentlich zu schließen, wenn sich das Ventil im geschlossenen Zustand befindet; und
einen Betätigungsabschnitt, der das Material aus Formgedächtnislegierung umfasst und mechanisch mit der Klappe verbunden ist, wobei der Betätigungsabschnitt derart eingerichtet ist, dass, wenn das Ventil auf die Übergangstemperatur erwärmt wird, während sich das Ventil im geschlossenen Zustand befindet, der Betätigungsabschnitt die Klappe bewegt, um den Luftstromkanal zu öffnen.

8. Aerosolerzeugungsartikel nach Anspruch 7, wobei der Betätigungsabschnitt und die Klappe ein Ganzes bilden.

9. Aerosolerzeugungsartikel nach Anspruch 7 oder Anspruch 8, wobei die leitfähige Schleife mechanisch mit dem Betätigungsabschnitt verbunden ist.

10. Aerosolerzeugungsartikel nach irgendeinem der Ansprüche 5 bis 9, wobei das Material aus Formgedächtnislegierung eine Curie-Temperatur von weniger als 200 °C, vorzugsweise weniger als 100 °C aufweist.

11. Aerosolerzeugungsartikel nach irgendeinem vorhergehenden Anspruch, wobei die leitfähige Schleife aus einem Metall, vorzugsweise Kupfer, gebildet ist.

12. Aerosolerzeugungsartikel nach irgendeinem vorhergehenden Anspruch, wobei der eine oder mehrere induktiv beheizbare Suszeptoren ein erstes Material umfassen und die leitfähige Schleife ein zweites Material umfasst, das einen niedrigeren Widerstand als das erste Material aufweist; und wobei das zweite Material vorzugsweise eine Formgedächtnislegierung ist.

13. Aerosolerzeugungsartikel nach irgendeinem vorhergehenden Anspruch, der ferner einen Filter zum Filtern des von Substrat produzierten Aerosols umfasst.

14. Aerosolerzeugungssystem, umfassend:
Den Aerosolerzeugungsartikel nach irgendeinem vorhergehenden Anspruch; und
eine Heizvorrichtung, die einen Induktor zur Erzeugung eines oszillierenden Magnetfelds umfasst, das wesentlich entlang der ersten Achse zur Erwärmung des einen oder mehrerer induktiv beheizbarer Suszeptoren ausgerichtet ist.

15. Aerosolerzeugungsartikel nach Anspruch 14, wobei die Heizvorrichtung eine Kammer umfasst, die angepasst ist, den Aerosolerzeugungsartikel aufzunehmen und den Aerosolerzeugungsartikel im oszillierenden Magnetfeld zu halten.

## Revendications

1. Un article de production d'aérosol (201) composé des éléments suivants :
un canal de circulation d'air (211) qui est aligné sur un premier axe
un composant matériel (213) positionné à l'intérieur du canal de circulation d'air, et ce composant matériel comporte un substrat de production d'un aérosol et un ou plusieurs suscepteurs de chauffage par induction qui assurent le chauffage de ce substrat et **se caractérisant par le fait qu'**une vanne (101) est positionnée à l'intérieur du canal de circulation d'air et se maintient à l'écart du composant matériel tout en restant alignée sur le premier axe, et cette vanne a un état ouvert et un état fermé et est configurée pour empêcher, de manière substantielle, le volume d'air qui circule dans le canal de circulation d'air lorsqu'elle est à l'état fermé et
une boucle conductrice (403) qui se maintient à l'écart du composant matériel, le long du premier axe, et est configurée pour produire, en présence d'un champ magnétique oscillant aligné, de manière substantielle, le long du premier axe, un champ magnétique inverse aligné sur le côté opposé au champ magnétique oscillant.

2. L'article de production d'aérosol que décrit la revendication 1, si ce n'est que la vanne et la boucle conductrice sont reliées l'une à l'autre par un dispositif mécanique.

3. L'article de production d'aérosol que décrit l'une ou l'autre des revendications précédentes, si ce n'est que la vanne fait partie intégrante de la boucle conductrice, et vice versa.

4. L'article de production d'aérosol que décrit l'une ou l'autre des revendications précédentes, si ce n'est que la boucle conductrice a la forme d'un anneau qui est essentiellement perpendiculaire au premier axe ou la forme d'un cylindre creux dont l'axe cylindrique vient essentiellement s'aligner sur le premier axe.

5. L'article de production d'aérosol que décrit l'une ou l'autre des revendications précédentes, si ce n'est que la vanne se compose d'un alliage à mémoire de forme qui est configuré de telle sorte que la vanne passe de l'état fermé à l'état ouvert lors d'un chauffage à une température de transition de l'alliage à mémoire de forme.

6. L'article de production d'aérosol que décrit la revendication 5, si ce n'est que l'alliage à mémoire de forme est configuré pour prendre une première forme lorsque la vanne est à l'état fermé et une deuxième forme lorsque la vanne est à l'état ouvert, et si ce n'est que cet alliage à mémoire de forme est positionné de telle sorte que lorsqu'il est chauffé à la température de transition alors qu'il a la première forme, cet alliage à mémoire de forme passe de la première forme à la deuxième forme afin de faire passer la vanne de l'état fermé à l'état ouvert.

7. L'article de production d'aérosol que décrit la revendication 5 ou 6, si ce n'est que la vanne se compose des éléments suivants :
un battant positionné de manière à fermer, de manière substantielle, le canal de circulation d'air lorsque la vanne est à l'état fermé et
une portion de déclenchement qui se compose de l'alliage à mémoire de forme et qui est raccordée par un dispositif mécanique au battant, et cette portion de déclenchement est positionnée de telle sorte que lorsque la vanne est chauffée à la température de transition alors que cette vanne est à l'état fermé, cette portion de déclenchement déplace le battant afin d'ouvrir le canal de circulation d'air.

8. L'article de production d'aérosol que décrit la revendication 7, si ce n'est que la portion de déclenchement fait partie intégrante du battant, et vice versa.

9. L'article de production d'aérosol que décrit la revendication 7 ou 8, si ce n'est que la boucle conductrice et la portion de déclenchement sont reliées l'une à l'autre par un dispositif mécanique.

10. L'article de production d'aérosol que décrit l'une ou l'autre des revendications 5 à 9, si ce n'est que l'alliage à mémoire de forme a une température de Curie inférieure à 200° C, de préférence inférieure à 100° C.

11. L'article de production d'aérosol que décrit l'une ou l'autre des revendications précédentes, si ce n'est que la boucle conductrice est en métal, de préférence en cuivre.

12. L'article de production d'aérosol que décrit l'une ou l'autre des revendications précédentes, si ce n'est que le ou les suscepteurs de chauffage par induction se composent d'un premier matériau et que la boucle conductrice se compose d'un deuxième matériau dont la résistivité est inférieure à celle du premier matériau et si ce n'est, de préférence, que le deuxième matériau est un alliage à mémoire de forme.

13. L'article de production d'aérosol que décrit l'une ou l'autre des revendications précédentes, si ce n'est qu'il comporte, en outre, un filtre de filtrage de l'aérosol produit par le substrat.

14. Un système de production d'aérosol qui se compose des éléments suivants :
l'article de production d'aérosol que décrit l'une ou l'autre des revendications précédentes et
le dispositif de chauffage qui se compose d'un inducteur de production d'un champ magnétique oscillant qui vient s'aligner, de manière substantielle, sur le premier axe, afin d'assurer le chauffage du ou des suscepteurs de chauffage par induction.

15. Le système de production d'aérosol que décrit la revendication 14, si ce n'est que le dispositif de chauffage comporte une chambre adaptée pour recevoir l'article de production d'aérosol et pour maintenir l'article de production d'aérosol dans le champ magnétique oscillant.
